(19) Europäisches Patentamt
European Patent Office
Office européen des brevets

(11) **EP 2 738 650 A1**

(12) **EUROPEAN PATENT APPLICATION**

(43) Date of publication:
04.06.2014 Bulletin 2014/23

(51) Int Cl.:
*G06F 3/0346* (2013.01)

(21) Application number: 13194537.0

(22) Date of filing: 26.11.2013

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 29.11.2012 US 201213689014

(71) Applicant: **State Farm Insurance**
**Bloomington, IL 61710 (US)**

(72) Inventors:
• **Peng, Jufeng**
**Normal, IL Illinois 61761 (US)**
• **Marzinzik, Duane**
**Springfield, IL Illinois 62702 (US)**

• **Fields, Brian**
**Normal, IL Illinois 61761 (US)**
• **Wilson, J.**
**Normal, IL Illinois 61761 (US)**
• **Bowne, Benjamin**
**Mackinaw, IL Illinois 61755 (US)**
• **Menon, Sunish**
**Normal, IL Illinois 61761 (US)**
• **Schneider, Dustin**
**Farmer City, IL Illinois 61842 (US)**
• **Christensen, Scott**
**Gibson City, IL Illinois 60936 (US)**

(74) Representative: **Grubert, Andreas**
**King & Spalding International LLP**
**125 Old Broad Street**
**London EC2N 1AR (GB)**

(54) **System and method for auto-calibration and auto-correction of primary and secondary motion for telematics applications via wireless mobile devices**

(57)     A mobile device for capturing motion data of a vehicle when the mobile device is travelling with the vehicle, the mobile device comprising: at least one sensor; a processor; a non-transitory storage medium; and an orientation algorithm comprising a set of computer readable instructions stored in the non-transitory storage medium and when executed by the processor configured to allow the mobile device to determine an orientation of the mobile device relative to an orientation of the vehicle; and a transformation algorithm comprising a set of computer readable instructions stored in the non-transitory storage medium and when executed by the processor configured to allow the mobile device to transform motion sensor data to remove secondary movement of the mobile device, which corresponds to the relative movement of the mobile device within the vehicle, and retain primary movement of the mobile device, which corresponds to the motion of the vehicle.

FIG. 3

EP 2 738 650 A1

**Description**

This disclosure relates generally to using a wireless mobile device to capture telematics motion data for vehicles. More particularly, embodiments disclosed herein relate to a system, method, and computer program product for determining the position and orientation of a device relative to a vehicle and correcting for secondary movement of the device relative to the vehicle. The system uses mobile device sensors as input to calibration algorithms used to determine the position of the mobile device relative to the vehicle and correction algorithms to adjust for secondary movement of the mobile device within the vehicle.

For a variety of purposes, including calculation of insurance premiums, systems have been developed to monitor vehicle operation. These systems may monitor many vehicle attributes, such as: location, speed, acceleration/deceleration, etc. The monitoring devices are integrated with the vehicle or plugged into the vehicle systems.

One example of a prior art system is illustrated by US 6,832,141. According to this disclosure, an onboard diagnostic memory module is configured to plug into the OBD II port and has a real-time clock and power supply, a microprocessor powered from a standard OBD II port, microprocessor operating firmware, and an attached memory (7 MB). In operation, the onboard diagnostic memory module is preprogrammed with data collection parameters through microprocessor firmware by connection to a PC having programming software for the module firmware. Thereafter, the onboard diagnostic memory module is moved into pin connection with the OBD II port of a vehicle. Data is recorded on a "trip" basis, preferably using starting of the engine to define the beginning of the trip and stopping of the engine to define the end of the trip. Intelligent interrogation occurs by interpretive software from an interrogating PC to retrieve a trip-based and organized data set including hard and extreme acceleration and deceleration, velocity (in discrete bands), distance traveled, as well as the required SAE-mandated operating parameters.

A further example of a prior art system is provided by US 5,499,182. This patent describes a vehicle driver performance monitoring system, wherein a plurality of vehicle component sensors are mounted to a host vehicle measure a plurality of vehicle component parameters indicative of a host vehicle's driver performance. A microprocessor module is detachably coupled to the vehicle mounting unit, which is affixed to and uniquely designated for a given host vehicle. The microprocessor module poles each vehicle sensor of that host vehicle to read, process, and store the vehicle operation data generated thereby. A playback mounting unit is provided to facilitate the connection of a remote computer to the host vehicle's microprocessor module to establish digital communication whereby the vehicle operation data and the analysis results processed therein are retrieved and displayed for a user.

Many of these prior monitoring devices require expert installation into the vehicle and further require the user to periodically withdraw the monitoring device to download the trip data. It is therefore an object of the present application to provide a system and method for a monitoring device which can be easily handled and installed by a user. This and other objects can be achieved by a system and method as defined in the independent claims. Further enhancements are characterized in the dependent claims.

According to various aspects of the present invention, the orientation of the mobile device may be resolved with respect to the vehicle and corrected for any movement of the mobile device relative to the vehicle to greatly improve vehicle movement data collection and accuracy. For purposes of this disclosure, primary movement of the mobile device is movement through the same vectors as the vehicle, and secondary movement of the mobile device is movement that is not through the same vectors as the vehicle. Embodiments of the invention may resolve the orientation of the mobile device with respect to the vehicle and correct for any secondary movement.

Another aspect of the invention is using the mobile device sensors and secondary movement to detect and quantify driver interaction with the mobile device during times of vehicle operation. This data can be used to calculate a risk score based on the secondary movements, driver tasks, cognitive load, and vehicle dynamics. For instance, a driver that is texting on a mobile device while driving at 85 m.p.h. and weaving through traffic may represent a higher crash risk.

A further aspect of the invention provides a mobile device for capturing motion data of a vehicle when the mobile device is travelling with the vehicle, the mobile device comprising: at least one sensor; a processor; a non-transitory storage medium; and an orientation algorithm comprising a set of computer readable instructions stored in the non-transitory storage medium and when executed by the processor configured to allow the mobile device to determine an orientation of the mobile device relative to an orientation of the vehicle; and a transformation algorithm comprising a set of computer readable instructions stored in the non-transitory storage medium and when executed by the processor configured to allow the mobile device to transform motion sensor data to remove secondary movement of the mobile device, which corresponds to the relative movement of the mobile device within the vehicle, and retain primary movement of the mobile device, which corresponds to the motion of the vehicle.

Still another aspect of the invention provides a tangible computer readable storage medium containing instructions that, when executed on by a processor, perform the following steps: determining the orientation of a mobile device relative to the orientation of a vehicle via collected mobile device orientation data and collected vehicle orientation data; and transforming collected mobile device motion data in view of the determined orientation of the mobile device relative to the orientation of the vehicle so that the collected mobile device motion data corresponds to the motion of the vehicle.

According to another aspect of the invention there is provided a method for capturing telematics motion data of a vehicle via a mobile device located within the vehicle, the method comprising: collecting mobile device orientation data at a point in time; collecting vehicle orientation data at about the same point in time; determining the orientation of the mobile device relative to the orientation of the vehicle via the collected mobile device orientation data and the collected vehicle orientation data; collecting mobile device motion data during a period of time after the point in time of the collecting mobile device orientation data; and transforming the collected mobile device motion data in view of the determined orientation of the mobile device relative to the orientation of the vehicle so that the collected mobile device motion data corresponds to the motion of the vehicle.

These, and other, aspects of the disclosure will be better appreciated and understood when considered in conjunction with the following description and the accompanying drawings. It should be understood, however, that the following description, while indicating various embodiments of the disclosure and numerous specific details thereof, is given by way of illustration and not of limitation.

The drawings accompanying and forming part of this specification are included to depict certain aspects of the disclosure. It should be noted that the features illustrated in the drawings are not necessarily drawn to scale. A more complete understanding of the disclosure and the advantages thereof may be acquired by referring to the following description, taken in conjunction with the accompanying drawings in which like reference numbers indicate like features.

FIGURE 1A depicts a perspective view of an exterior of a vehicle having longitudinal axis $X_V$ latitudinal axis $Y_V$ and vertical axis $Z_V$.

FIGURE 1B depicts a perspective view of a mobile device having longitudinal axis $X_{MD}$, latitudinal axis $Y_{MD}$ and vertical axis $Z_{MD}$.

FIGURE 1C depicts a perspective view of an interior of a vehicle with a mobile device therein.

FIGURE 2 depicts a block diagram of a mobile device having a memory, processor, display, sensors, and input/output devices.

FIGURE 3 depicts a block diagram of a portion of a mobile device wherein data flows are illustrated being communicated between portions of the mobile device.

FIGURE 4 is a process flow diagram illustrating the collection of orientation and movement data, reconciliation of the position of the mobile device relative to the vehicle, and transformation of motion data in view of the reconciled position or orientation;

FIGURE 5 is a depiction of the three-point radius method.

FIGURE 6 shows an architectural design for a data transmission infrastructure comprising a remote data storage system and a property and casualty system, wherein data may be transmitted via a network from a mobile device in a vehicle to a remote data storage system.

FIGURE 7 illustrates an alignment strategy according to an embodiment of the present invention for an orientation algorithm module and a transformation algorithm module to use based on two rotation matrices.

FIGURE 8 is a vector diagram corresponding to an algorithm for doing a reference check against gravity, wherein the method determines two out of three axes' orientations, and wherein when considering the effects of gravity, the entire acceleration would be focused in the downward (-Z) direction.

FIGURE 9 is a vector diagram corresponding to an algorithm for determining two out of three axes' orientations, namely the differences between XZ and YZ, namely that X is positive to the left.

FIGURE 10 illustrates a vector diagram for one method of addressing an XY plane problem, wherein in the XY plane, gravity provides zero acceleration and cannot assist in orientating the mobile device to the vehicle.

FIGURE 11 illustrates a vector diagram for a mobile device frame wherein an algorithm that may assume that the majority of a vehicle's acceleration/deceleration is along the y-axis, to provide a more consistent picture that is independent of the magnitude of the vehicle's acceleration and braking.

FIGURE 12 illustrates a vector diagram for a vehicle frame, wherein V lies entirely along the Y axis.

FIGURE 13 shows a result of applying a method of calculating gamma ($\gamma$) at every point along an entire trip or drive, wherein the mobile device was offset sixty degrees (60°) from the y-axis of the vehicle.

FIGURE 14 illustrates computer code for a GPS Only Method algorithm.

The disclosure and various features and advantageous details thereof are explained more fully with reference to the exemplary, and therefore non-limiting, embodiments illustrated in the accompanying drawings and detailed in the following description. It should be understood, however, that the detailed description and the specific examples, while indicating the preferred embodiments, are given by way of illustration only and not by way of limitation. Descriptions of known programming techniques, computer software, hardware, operating platforms and protocols may be omitted so as not to unnecessarily obscure the disclosure in detail. Various substitutions, modifications, additions and/or rearrangements will become apparent to those skilled in the art from this disclosure.

Portable wireless mobile devices, including smart phones such as the Apple iPhone, can be used to capture telematics motion data of vehicles. The data can be used for evaluating driving behavior data and/or driving environment data, and using such data to calculate insurance premiums. Such methods may utilize data from the mobile device's GPS (Global Positioning System) and accelerometers to determine vehicle speed, acceleration, driver activity, and the like. To acquire vehicle data via a mobile device, the position of the mobile device may be fixed within the vehicle. For example, The mobile device may be fixed relative to the vehicle via a semi-permanent dock within the vehicle, such as on or associated with a vehicle's dashboard, so as to ensure that the orientation and position of the mobile device relative to the vehicle remain constant and known. This solution requires a dock system to be mounted in the vehicle, and it may inconvenience the user who must insert the mobile device into the dock each time the user operates the vehicle.

If not fixed within the vehicle, the position and orientation of the mobile device within the vehicle should be known to a certain degree of accuracy to make reliable estimates of the vehicle's motion. If not fixed within the vehicle, due to user manipulation or other influences, the mobile device may change positions relative to the vehicle during a monitoring period. Drivers may choose to keep their mobile device in a pocket, purse, or cup holder and can also move their mobile device from place to place or even interact with it while driving. When a mobile device is not rigidly fixed within the vehicle, independent movement of the mobile device relative to the vehicle can result in erroneous readings of vehicle movement, unless correlated.

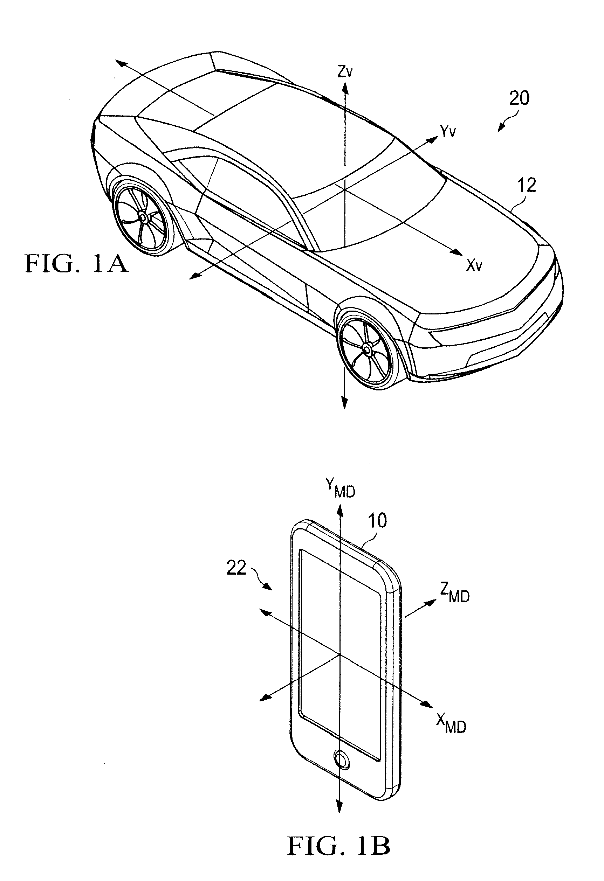

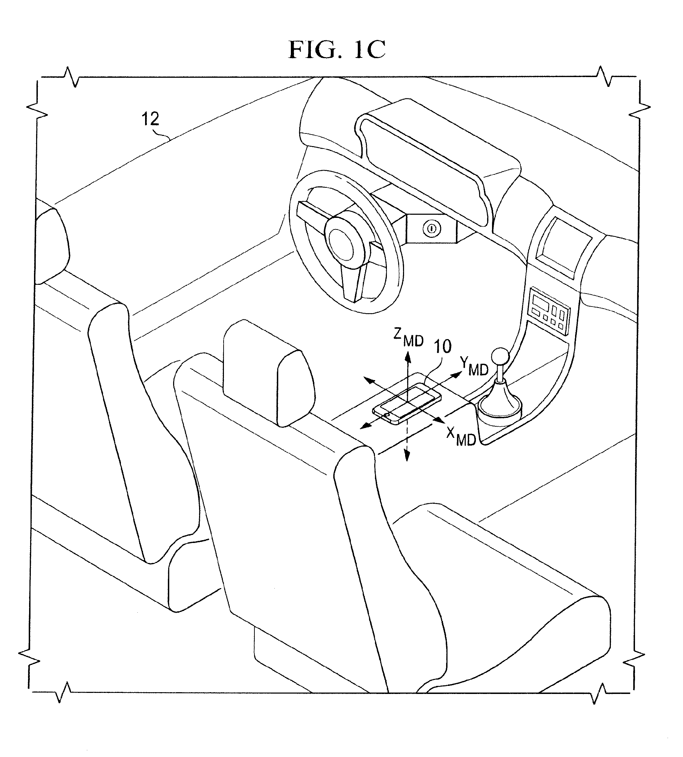

FIGURE 1A illustrates a vehicle 12. FIGURE 1B shows a mobile device 10. FIGURE 1C illustrates an example mobile device 10 located in a vehicle 12. As shown in FIGURE 1A, the vehicle 12 can be thought of having three axes: longitudinal (y), lateral (x), and vertical (z). The longitudinal axis runs through the length of the car and out the windshield, the lateral axis runs widthwise through the car through the side windows, and the vertical axis runs normal to the surface of the Earth through the roof of the car. These axes of the vehicle 12 may define a set of axes 22, $X_V$ (longitudinal), $Y_V$ (lateral), $Z_V$ (vertical). As shown in FIGURE 1B, the mobile device 10 may also define a set of axes 20, $X_{MD}$, $Y_{MD}$, $Z_{MD}$. As shown in FIGURE 1C, when the mobile device 10 is positioned within the vehicle 12, the two reference sets of axes 20 and 22 may be assumed to share a common origin, but the axes may not be similarly oriented. Embodiments of the invention, however, determine the orientation of the mobile device 10 and reconcile it with that of the vehicle 12 to ensure that meaningful vehicle telematics data is collected. During the process of reconciling the two sets of axes, sign errors may arise when considering whether acceleration is acting as a positive force or negative force, and care should be taken to stay internally consistent.

Mobile device 10 may comprise any type of portable or mobile electronics device, such as for example a Smartphone, a cell phone, a mobile telephone, personal digital assistant (PDA), laptop computer, tablet-style computer, or any other portable electronics device. For example, in some embodiments, mobile device 10 may be a smart phone, such as an iPhone by Apple Inc., a Blackberry phone by RIM, a Palm phone, or a phone using an Android, Microsoft, or Symbian operating system (OS), for example. In some embodiments, mobile device 10 may be a tablet, such as an iPad by Apple, Inc., a Galaxy by Samsung, or Eee Pad Transformer by ASUS, and Latitude ST Tablet PC by Dell, for example.

In some embodiments, mobile device 10 may be configured to provide one or more features of a driving analysis system, such as (a) collection of driving data (e.g., data regarding driving behavior and/or the respective driving environment), (b) processing of collected driving data, (c) providing collected driving data and/or processed driving data to a server or database via telecommunication or telematics, (d) and/or compensating for or correcting for position, orientation, or movement of the Smartphone relative to the vehicle. Accordingly, mobile device 10 may include one or more sensors, a driving analysis application, a display, and transmitters.

The sensor(s) may collect one or more types of data regarding driving behavior and/or the driving environment. For example, mobile device 10 may include a built-in accelerometer configured to detect acceleration in one or more directions (e.g., in the x, y, and z directions). As another example, mobile device 10 may include a GPS (global positioning system) device or any other device for tracking the geographic location of the mobile device. As another example, mobile device 10 may include sensors, systems, or applications for collecting data regarding the driving environment, e.g., traffic congestion, weather conditions, roadway conditions, or driving infrastructure data. In addition or alternatively, mobile device 10 may collect certain driving data (e.g., driving behavior data and/or driving environment data) from sensors and/or devices external to mobile device 10 (e.g., speed sensors, blind spot information sensors, seat belt sensors, GPS device, etc.). Examples of sensors that can be used for this process include but are not limited to: Microphone; Accelerometer; GPS; Gyroscope; Compass; Proximity Sensors; Magnetometer; Camera; Status of incoming calls; Wi-Fi; NFC; Bluetooth.

The driving analysis application ("APP") on mobile device 10 may process any or all of this driving data collected by mobile device 10 and/or data received at mobile device 10 from external sources to calculate one or more driving behavior metrics and/or scores based on such collected driving data. For example, a driving analysis application may calculate acceleration, braking, and cornering metrics based on driving behavior data collected by the built-in accelerometer (and/or other collected data). Driving analysis application may further calculate scores based on such calculated metrics, e.g., an overall driving score. As another example, driving analysis application may identify "notable driving events," such as instances of notable acceleration, braking, and/or cornering, as well as the severity of such events. In some embodiments, the driving analysis application may account for environmental factors, based on collected driving environment data corresponding to the analyzed driving session(s). For example, the identification of notable driving events may depend in part on environmental conditions such as the weather, traffic conditions, road conditions, etc. Thus, for instance, a particular level of braking may be identified as a notable driving event in the rain, but not in dry conditions. The driving analysis application may also compensate for orientation and/or movement of the smart pone within the vehicle, as will be explained in greater detail below.

The driving analysis application may display the processed data, e.g., driving behavior metrics and/or driving scores. In embodiments in which mobile device 10 includes a GPS or other geographic location tracking device, the application may also display a map showing the route of a trip, and indicating the location of each notable driving event. The application may also display tips to help drivers improve their driving behavior.

The driving analysis application may display some or all of such data on the mobile device 10 itself. In addition or alternatively, the driving analysis application may communicate some or all of such data via a network or other communication link for display by one or more other computer devices (e.g., smart phones, personal computers, etc.). Thus, for example, a parent or driving instructor may monitor the driving behavior of a teen or student driver without having to access the mobile device 10. As another example, an insurance company may access driving behavior data collected/processed by mobile device 10 and use such data for risk analysis of a driver and determining appropriate insurance products or premiums for the driver according to such risk analysis (i.e., performing rating functions based on the driving behavior data collected/processed by mobile device 10).

According to one aspect of the invention, the mobile device and vehicle are made to share a common reference frame. Due to the fact that the mobile device is assumed to be inside the vehicle when vehicle telematics data is collected, it can be assumed that both reference frames share a common origin. However, the axes of the two reference frames will not necessarily be aligned, and methods will need to be introduced to transfer vectors from one reference frame to the other.

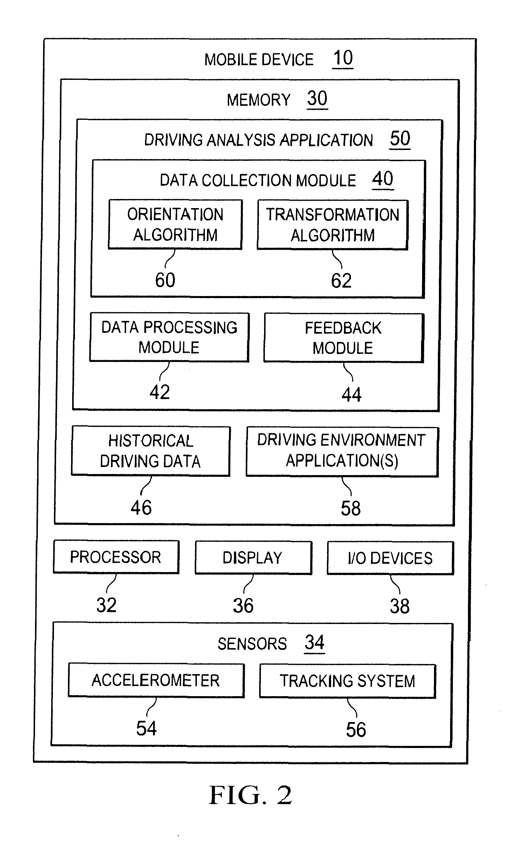

FIGURE 2 illustrates example components of mobile device 10 relevant to the driving analysis system discussed herein, according to certain embodiments. As shown, mobile device 10 may include a memory 30, processor 32, one or more sensors 34, a display 36, and input/output devices 38.

Memory 30 may store a driving analysis application 50 and historical driving data 46, as discussed below. In some embodiments, memory 30 may also store one or more environmental data applications 58, as discussed below. Memory 30 may comprise any one or more devices suitable for storing electronic data, e.g., RAM, DRAM, ROM, internal flash memory, external flash memory cards (e.g., Multi Media Card (MMC), Reduced-Size MMC (RS-MMC), Secure Digital (SD), MiniSD, MicroSD, Compact Flash, Ultra Compact Flash, Sony Memory Stick, etc.), SIM memory, and/or any other type of volatile or non-volatile memory or storage device. Driving analysis application 50 may be embodied in any combination of software, firmware, and/or any other type of computer-readable instructions

Application 50 and/or any related, required, or useful applications, plug-ins, readers, viewers, updates, patches, or other code for executing application 50 may be downloaded via the Internet or installed on mobile device 10 in any other known manner. The application 50 may be a software application ("APP") provided for operating systems such as those employed by iPhone, iPad and Android systems. Once the APP is downloaded to the mobile device and launched for initial set up, no additional start/stop activities by the user may be required. The APP may collect data using sensors in the mobile device to determine miles driven, location, time, and vehicle dynamics (g-force events such as hard stops, sharp turns, fast accelerations, etc.). The APP may further implement one of more modules for compensating for orientation and movement of the mobile device relative to the vehicle.

Computing infrastructure may be provided for receiving telematics data from customer Smartphones in real time. The infrastructure may be a cloud computing infrastructure.

In one embodiment of the invention, the APP may utilize sensors in a Smartphone to automatically start and stop the application once initially setup on the Smartphone. Automated tracking may use algorithms to use the Smartphone/server architecture to determine driving, mileage, etc. The APP may turn itself "on" as soon as the Smartphone detects that it is in an automobile with its engine running. The Smartphone may communicate with the vehicle via Bluetooth to determine that the Smartphone is inside the vehicle and that the engine is running.

Once the APP has turned itself on, it may monitor its position and speed, etc., relative to the vehicle. The resulting values obtained can be used to correct and transform to achieve usable vehicle telematics data. Once detected, the APP may then turn itself on and begin tracking miles driven, location, time, and vehicle dynamics (g-force data). The APP may be configured so that interaction with a driver is limited, such that the APP will run automatically on the Smartphone after initial setup, wherein automatic start and stop capabilities may be accomplished using Smartphone sensors.

According to certain embodiments of the invention, a Smartphone based telematics technology solution may be implemented. A mobile device equipped with software may capture and transmit the miles driven and vehicle dynamics (g-force events such as hard stops, sharp turns, fast accelerations, etc.) in an automated fashion. Furthermore, the Smartphone may be configured to calculate and compensate for phone orientation and/or movement with respect to the vehicle.

Processor 32 may include a microprocessor, a microcontroller, a digital signal processor (DSP), an application specific integrated controller (ASIC), electrically-programmable read-only memory (EPROM), or a field-programmable gate array (FPGA), or any other suitable processor(s), and may be generally operable to execute driving analysis application 50, as well as providing any other functions of mobile device 10.

Sensors 34 may include any one or more devices for detecting information regarding a driver's driving behavior and/or the driving environment. For example, as discussed above, sensors 34 may include an accelerometer 54 configured to detect acceleration of the mobile device 10 (and thus, the acceleration of a vehicle in which mobile device 10 is located) in one or more directions, e.g., the x, y, and z directions. As another example, mobile device 10 may include a location tracking system 56, such as a GPS tracking system or any other system or device for tracking the geographic location of the mobile device. A solid state compass, with two or three magnetic field sensors, may provide data to a microprocessor to calculate direction using trigonometry. The mobile device 10 may also include proximity sensors, a camera or ambient light.

Display 36 may comprise any type of display device for displaying information related to driving analysis application 50, such as for example, an LCD screen (e.g., thin film transistor (TFT) LCD or super twisted nematic (STN) LCD), an organic light-emitting diode (OLED) display, or any other suitable type of display. In some embodiments, display 36 may be an interactive display (e.g., a touch screen) that allows a user to interact with driving analysis application 50. In other embodiments, display 36 may be strictly a display device, such that all user input is received via other input/output devices 38.

Input/output devices 38 may include any suitable interfaces allowing a user to interact with mobile device 10, and in particular, with driving analysis application 50. For example, input/output devices 38 may include a touch screen, physical buttons, sliders, switches, data ports, keyboard, mouse, voice activated interfaces, or any other suitable devices.

As discussed above, driving analysis application 50 may be stored in memory 30. Driving analysis application 50 may be described in terms of functional modules, each embodied in a set of logic instructions (e.g., software code). For example, as shown in FIGURE 2, driving analysis application 50 may include a data collection module 40, a data processing module 42, and a feedback module 44.

Data collection module 40 may be operable to manage the collection of driving data, including driving behavior data and/or the driving environment data. Data collection module 40 may collect such data from any number and types of data sources, including (a) data sources provided by mobile device 10 (e.g., sensors 34, environmental data application 58), (b) data sources in vehicle 12 but external to mobile device 10 (e.g., on-board vehicle computer, seat belt sensors, GPS system, etc.), and/or (c) data sources external to vehicle 12 (e.g., data sources accessible to mobile device 10 by a satellite network or other telecommunication links). In certain embodiments, the mobile device 10 may communicate with data source in vehicle 12 but external to mobile device 10 via a hardwire connection, Bluetooth® or other wireless means, optical signal transmission, or any other known manner. Sources in vehicle 12 but extended to mobile device 10 may include: engine RPM, speedometer, fuel usage rate, exhaust components or other combination indications, suspension system monitors, seat belt use indicators, tracking systems for other vehicles in vicinity, blind spot indicators.

In some embodiments, data collection module 40 may control the start and stop of driving data collection, e.g., from sources such as accelerometer 54, location tracking system 56, other sensor(s) 34 provided by mobile device 10, or other sensors or sources of driving data external to mobile device 10. In some embodiments or situations, driving data collection is manually started and stopped by the driver or other user, e.g., by interacting with a physical or virtual object (e.g., pressing a virtual "start recording" button) on mobile device 10.

In other embodiments or situations, data collection module 40 may automatically start and/or stop collection of driving data in response to triggering signals received by mobile device 10 from one or more triggering devices 15 associated with vehicle 12 (see FIGURE 1C). For example, triggering device 15 may include a vehicle on-board computer, ignition system, car stereo, GPS system, a key, key fob, or any other device that may be configured to communicate signals to mobile device 10. Triggering signals may include any signals that may indicate the start or stop of a driving trip. For example, triggering signals may include signals indicating the key has been inserted into or removed from the ignition, signals indicating the ignition has been powered on/off, signals indicating whether the engine is running, signals indicating the radio has been powered on/off, etc. or signals indicating the transmission has been set in a forward gear position. Such triggering device(s) may communicate with mobile device 10 in any suitable manner, via any suitable wired or wireless communications link.

As another example, data collection module 40 may automatically start and/or stop collection of driving data in response to determining that the mobile device 10 is likely travelling in an automobile, e.g., based on a real time analysis of data received from accelerometer 54, location tracking system 56, or other sensors 34 provided by mobile device 10. For example, data collection module 40 may include algorithms for determining whether mobile device 10 is likely travelling in an automobile based on data from accelerometer 54 and/or location tracking system 56, e.g., by analyzing one or more of (a) the current acceleration of mobile device 10 from accelerometer 54, (b) the current location of mobile device 10 from location tracking system 56 (e.g., whether mobile device 10 is located on/near a roadway), (c) the velocity of mobile device 10 from location tracking system 56, (d) any other suitable data, or (e) any combination of the preceding.

In some embodiments or situations, data collection module 40 may allow or trigger the start and stop (including interrupting and re-starting) of driving data collection based on the orientation of mobile device 10 (relative to vehicle 12), e.g., based on whether the orientation is suitable for collecting driving data. For example, data collection module 40 may allow driving data collection to be manually or automatically started (or re-started after an interruption). Further, during driving data collection, module 40 may automatically stop or interrupt the driving data collection if mobile device 10 is moved such that it is no longer suitably able to collect driving data.

As shown in FIGURE 2, the data collection module 40 may comprise an orientation algorithm module 60 and a transformation algorithm module 62. The data collection module 40 may manage the physical orientation of mobile device 10 relative to the vehicle 12. Module 40 may determine the orientation of mobile device 10 within the vehicle 12 by comparing GPS and position information for the mobile device 10 with GPS and position information for the vehicle 12. In other embodiments, mobile device 10 is capable of automatically compensating for the orientation of mobile device 10 for the purposes of processing collected driving data (e.g., by data processing module 42), such that data collection may start and continue despite the orientation of mobile device 10, or changes to the orientation of the mobile device 10 relative to the vehicle 12. Module 40 may continue to monitor the orientation of mobile device 10 relative to the vehicle during the driving data collection session, and if a change in the orientation is detected, automatically compensate for the changed orientation of mobile device 10 for processing driving data collected from that point forward. In such embodiments, data processing module 42 may include any suitable algorithms for compensating for the orientation of mobile device 10 (relative to automobile 12) determined by data collection module 40. Such aspects of the invention allow the mobile device to collect accurate g-force data from the sensors of the mobile device regardless of the position of the mobile device in the vehicle. The quality of this data is improved by adjusting the data based on the orientation of the mobile device in the vehicle such as upside down, sideways, in a pocket or in a purse.

The orientation algorithm module 60 assumes that the mobile device 10 is located inside the vehicle 12 such that the set of axes for the mobile device 20 and the set of axes for the vehicle 22 share a common origin. To account for movements of the mobile device within the vehicle, the relative orientation at a given point in time must first be determined. This initial orientation is found using sensor data from the mobile device and using mathematical algorithms.

The transformation algorithm module 62 transforms data from the sensors in view of the orientation of the mobile device 10 relative to the vehicle 12 as determined by the orientation algorithm module 60. Once the orientation is known for a given time, the sensor data recorded for that time may be modified by the transformation algorithm module 62 before it is analyzed. Once this transformation is performed on the data, the sensor values should be indicative of the motion of the car and can be used in future analysis.

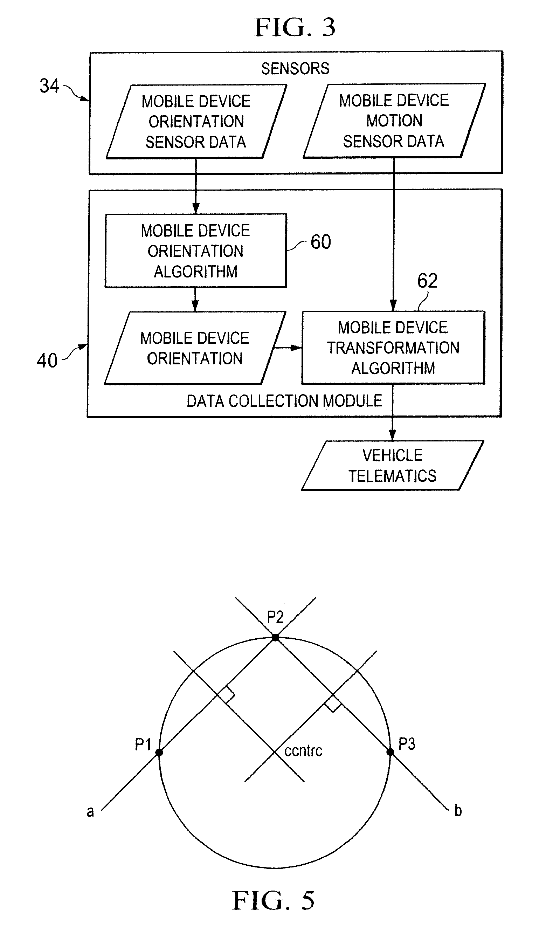

FIGURE 3 illustrates this calibration process to account for movements of the mobile device 10 within the vehicle 12. Two algorithms may be used to implement the process: a mobile device orientation algorithm 60 and a mobile device transformation algorithm 62. Sensor data from the mobile device sensors 34 is provided to both algorithms. As discussed above, the sensor data may include a variety of information such as GPS position, accelerometer, orientation, and so forth. When mobile device orientation sensor data for a given point in time is provided to the mobile device orientation algorithm 60, the algorithm produces a mobile device orientation for that point in time, which represents the position of the set of axes 20, $X_{MD}$, $Y_{MD}$, $Z_{MD}$ of the mobile device 10 relative to the set of axes 22, $X_V$, $Y_V$, $Z_V$ of the vehicle 12. The resulting mobile device orientation for the given point in time is provided to a mobile device transformation algorithm 62 along with mobile device motion sensor data from the sensors 34 for a period of time immediately after the given point in time. The transformation algorithm 62 transforms the motion sensor data so as to "remove" the secondary movement of the mobile device 10, which corresponds to the relative movement of the mobile device within the vehicle, leaving only the primary movement of the mobile device 10, which corresponds to the telematics data or motion of the vehicle 12. Thus, the calibration process produces telematics data or data representing the motion of the vehicle 12 for a period of time immediately after the given point in time.

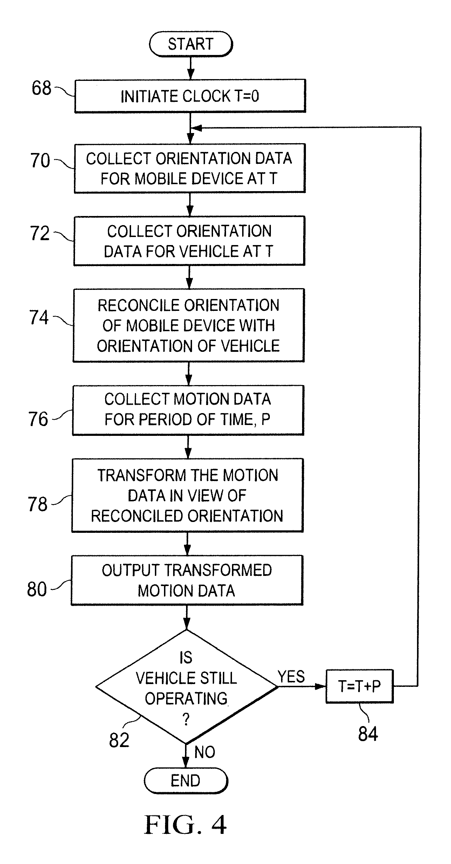

Referring to FIGURE 4, a flow chart is provided of a process for using a mobile device 10 to collect and record accurate movement information of a vehicle 12, regardless of movement of the mobile device 10 within the vehicle 12. During a trip, when the operator of the vehicle 12 drives the vehicle 12 around town or down the highway, the mobile device may update its orientation at various points in time during the trip. For example, the mobile device orientation algorithm 60 may recalculate the mobile device orientation every second, every 5 seconds, or every 10 seconds. The recalculation may be done periodically at any time interval or it may be done at random time intervals. As shown in FIGURE 4, a clock within the mobile device 10 is initialized 68 to T = 0. Next, orientation data for the mobile device 10 is collected 70 at the given point in time T = 0. The mobile device 10 also collects 72 orientation data for the vehicle 12 at the given point in time T = 0. The mobile device 10 then reconciles 74 the orientation of the mobile device 10 with the orientation of the vehicle 12 at the given point in time T = 0. With the relative orientation of the mobile device 10 known, the mobile device 10 then collects 76 motion data for a period of time, P. The length of the period of motion data collection may be any length of time, for example, 1 second, 5 seconds, or a minute. The collected motion data is then transformed 78 in view of the reconciled orientation. The mobile device 10 then outputs 80 the transformed motion data. The mobile device may then query 82 whether the vehicle is still operating. If yes, the time clock T is incremented by the period of time, P and orientation data is again collected at step 70 so that the entire process may be repeated. If the vehicle is not still operating, the process ends.

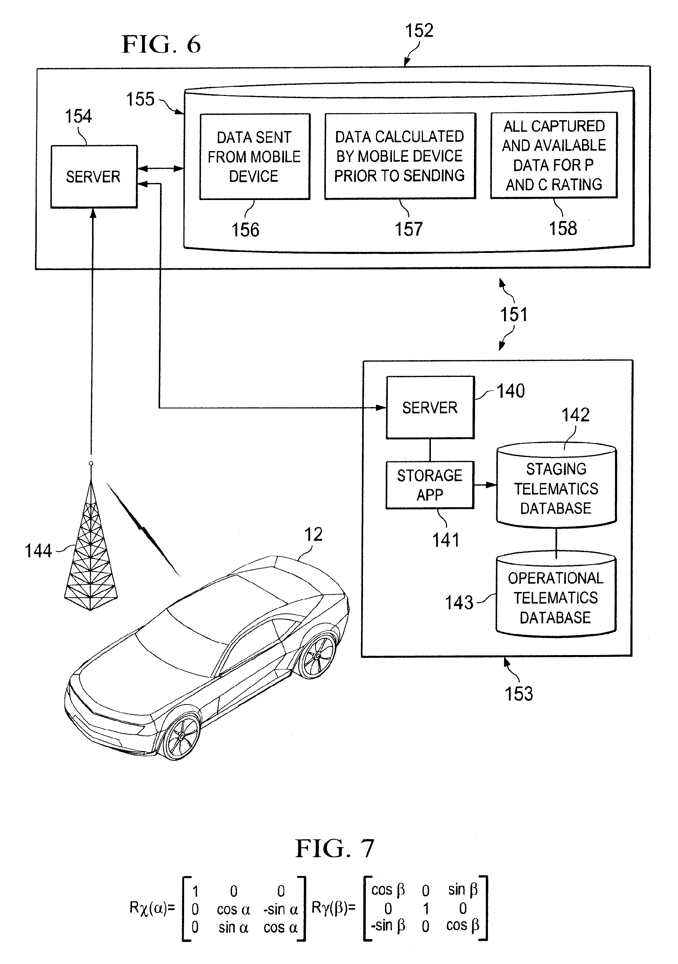

As shown in FIGURE 7, an alignment strategy according to an embodiment of the present invention for an orientation algorithm module 60 and a transformation algorithm module 62 may be based on two rotation matrices. Two rotation matrices may be used to rotate around the x-axis ($R_x(\alpha)$) and the y-axis ($R_y(\beta)$), respectively. Alpha ($\alpha$) and beta ($\beta$) are two of the Euler angles used to determine the amount of rotation required, and these matrices are multiplied by the original vector to provide an output vector in the desired frame. By multiplying all three X-Y-Z rotation matrices together it is possible to create a total rotation matrix:

$$\cos\alpha\cos\gamma \;\&\; -\cos\beta\sin\gamma \;\&\; \sin\beta \;@\; \sin\alpha\sin\beta\cos\gamma + \cos\alpha\sin\gamma \;\&\; -$$

$$\sin\alpha\sin\beta\sin\gamma + \cos\alpha\cos\gamma \;\&\; -\sin\alpha\cos\beta \;@\; -\cos\alpha\sin\beta\cos\gamma +$$

$$\sin\alpha\sin\gamma \;\&\; \cos\alpha\sin\beta\sin\gamma + \sin\alpha\cos\gamma$$

The algorithm may then solve for alpha ($\alpha$) and beta ($\beta$).

Next, the algorithm may then reference check against gravity. The reference check against gravity is an extremely simple and mathematically elegant method of determining two out of three axes' orientations. Ideally, when considering the effects of gravity, the entire acceleration would be focused in the downward (-Z) direction: $X_a = 0$; $Y_a = 0$; $Z_a = -1$. However, the mobile device 10 may not necessarily be oriented with its vertical axis ($Z_a$) pointed perfectly downward. For instance, the mobile device 10 could be oriented thusly: $X_i = 0$; $Y_i = -0.7071$; $Z_i = -0.7071$. Perhaps it is possible to deduce by intuition and an understanding of trigonometry that that in this orientation, the mobile device 10 is rotated 45 degrees around the x axis, and that this pitch is splitting the gravity vector into two equal components along both the z and y axis. This can also be expressed mathematically in the equation that:

$$\beta = a\tan(Z/Y)$$

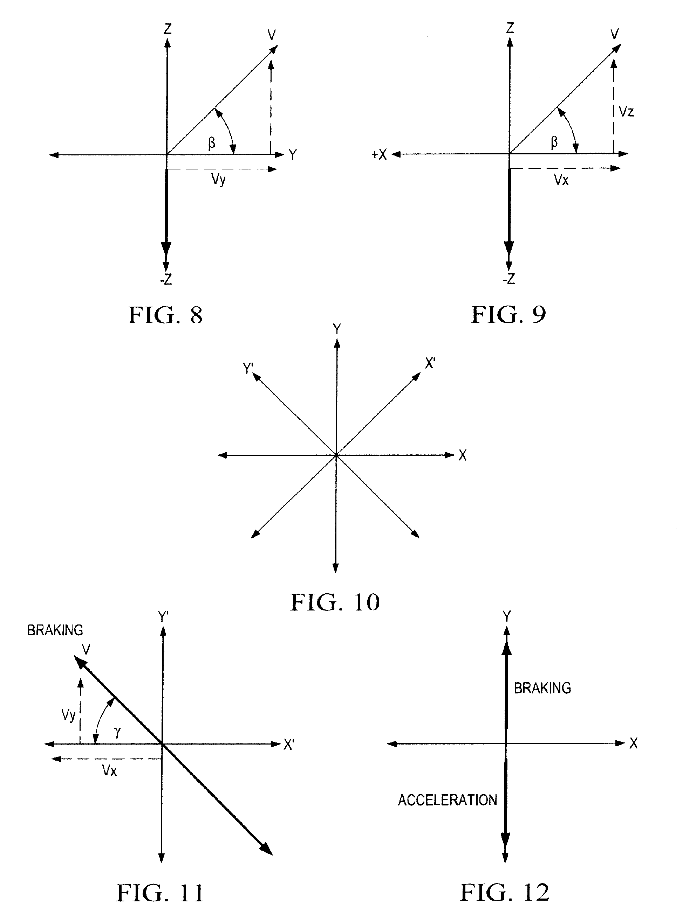

Where Z and Y are the axial components of gravity, and beta ($\beta$) is the angle in radians between them. After computing beta ($\beta$), the next step of the method is to rotate the vector fully into the -Z direction, because it is the gravity vector. Due to the limitations of the atan function (-90 to 90 degrees), this should be accomplished on a quadrant by quadrant basis. The diagram shown in FIGURE 8 and Table 1 illustrate the problem.

| TABLE 1 | |
| --- | --- |
| Quadrant | Rotation |
| I | -($\beta$ + $\pi$/2) |

(continued)

| TABLE 1 | |
|---|---|
| Quadrant | Rotation |
| II | $\beta + \pi/2$ |
| III | $-\beta + \pi/2$ |
| IV | $\beta - \pi/2$ |

The exact same methodology can be applied to the XZ axis as well, and therefore two degrees of freedom of the mobile device 10 can be eliminated. The diagram shown in FIGURE 9 illustrates the differences between XZ and YZ, namely that X is positive to the left. The rotation by quadrants will also be different for this plane due to the sign convention. Now that the mobile device 10 is aligned with the vehicle 12 along its Z axis, the algorithm simply needs to solve for the final remaining angle of rotation around that axis. This will allow the XY mobile device plane to align with the XY vehicle plane.

Another extremely important and useful bit of information regarding the gravity method is the Gravity Call filter provided by the device. The gravity call takes acceleration data and runs it through a filter. This filter takes 90% of the past value of acceleration and 10% of the current value of acceleration in order to compute the new effect of gravity. This minimizes noise and influence from vehicle acceleration while also keeping the app informed as to whether the mobile device 10 has shifted or not.

FIGURE 10 illustrates one method of addressing an XY plane problem. In the XY plane, gravity provides zero acceleration and cannot assist in orientating the mobile device 10 to the vehicle 12. The mobile device 10 could potentially receive acceleration inputs from all 360 degrees of the plane, and these inputs could correspond to braking, accelerating, turning, or a combination of these. Modern research and development into inertial navigation and guidance has never sought to address this problem, as ensuring the alignment of sensors and vehicle is a primary concern and a trivial solution. However, providing long-term estimates of braking, accelerating, and turning behavior of a vehicle 12 does not require nearly as much accuracy as controlling the motion of a mobile device 10 simply by knowing its acceleration vectors.

The algorithm may assume that the majority of a vehicle's acceleration is along the y-axis, and that when this is not the case then lateral x-axis acceleration can be filtered out. This is very similar to the gravity solution, which does not have to assume when making the statement that all acceleration is along the Z-axis. Further refinement of this assumption gives more accurate results. FIGURE 11 illustrates the methodology, wherein methodology can also be expressed mathematically in the equation that:

$$\gamma = a\tan(Vy/Vx)$$

Where gamma ($\gamma$) is the angle in radians between $V_x$ and $V_y$, the axial components of the vector V. $V_y$ and $V_x$ are first normalized in order to provide a more consistent picture of gamma that is independent of the magnitude of the vehicle's acceleration and braking. FIGURE 11 shows the mobile device frame, while FIGURE 12 shows the vehicle frame. In the vehicle frame (see FIGURE 12), V lies entirely along the Y axis.

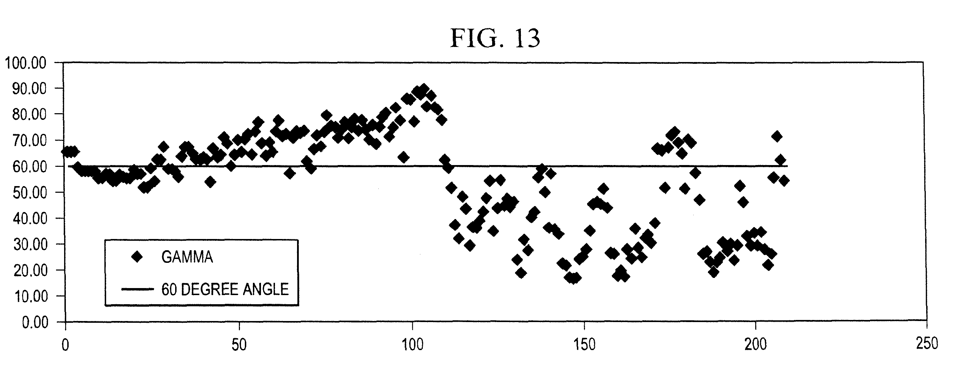

Gamma ($\gamma$) may be calculated for every data point along the entire trip, and then averaged out. The chart shown in FIGURE 13 shows a result of applying this method on a drive where the mobile device 10 was offset sixty degrees (60°) from the y-axis of the vehicle 12. The chart of FIGURE 13 clearly shows that many gamma ($\gamma$) data points lie either far above ninety degrees (90°) or far below fifteen degrees (15°) the target line. Gamma ($\gamma$) also requires quadrant by quadrant rotation similar to alpha ($\alpha$) and beta ($\beta$) due to the arctangent's limited domain, this rotation is provided in Table 2.

| TABLE 2 | |
|---|---|
| Quadrant | Rotation |
| I | $-G + \pi/2$ |
| II | $G - \pi/2$ |
| III | $-G - \pi/2$ |
| IV | $G + \pi/2$ |

Studies suggest that it is outputting acceleration and braking values opposite of the initial analysis, which can be remedied by a single sign fix at the end of the algorithm for the orientation algorithm module 60 and a transformation algorithm module 62.

Once the corrected values, i.e., the values compensating for the orientation of the mobile device, are known, a variety of techniques may be used to determine the lateral acceleration (LatG), longitudinal acceleration (LonG), and speed (Speed) of the vehicle at a specific point in time. Three techniques that may be suitable are discussed below and are referred to as GPS Only Method, Decomposition Method and Driver Feedback with GPS.

Table 1 provides a comparison of the sensors that are used with each technique.

| TABLE 1 | | | | | | |
|---|---|---|---|---|---|---|
| Method | GPS | | | Accelerometer | | |
| | Latitude | Longitude | Speed | X | Y | Z |
| 1. GPS Only | X | X | X | | | |
| 2. Decomposition | | | X | X | X | X |
| 3. Driver Feedback with | | | X | X | X | X |
| GPS | | | | | | |

Before assigning a value for LatG, all of the algorithms perform a turn check that ensures the vehicle is performing a turn before assigning a value.

**GPS Only Method:**

The GPS Only Method makes a speed call to the GPS sensor of the location tracking system 56 (FIG. 2) and uses this value in the calculation of both LonG and LatG. To calculate LonG, the derivative of speed is taken. To calculate LatG, Speed is squared and divided by the turn radius. The turn radius may be calculated using the Three-Point Method, which is described with reference to FIGURE 5. The method is to connect one of the points (P1, P2 or P3) to each of the other points. In the example shown in FIGURE 5, point P2 is connected to point P1 via a connecting line, and point P2 is connected to point P3 via another connecting line. Perpendicular bisectors of the two connecting lines are then used to identify a point of intersection of the two perpendicular bisectors. This point of intersection defines the center of a circle and the circle passes through all three points (P1, P2 and P3). The circle of FIGURE 5 is assumed to have the same radius as the turn radius of the vehicle. The slopes of lines a and b are given by:

$$m_a = \frac{y_2 - y_1}{x_2 - x_1} \quad \text{and} \quad m_b = \frac{y_3 - y_2}{x_3 - x_2}$$

1 The perpendicular bisectors, $y_{aperp}$ and $y_{bperp}$ have slopes of $-\frac{1}{m_a}$ and $-\frac{1}{m_b}$, respectively, and therefore their equations are given by:

$$y_{a\,perp} = -\frac{x_2 - x_1}{y_2 - y_1}\left(x - \frac{x_1 + x_2}{2}\right) + \frac{y_1 + y_2}{2}$$

$$y_{b\,perp} = -\frac{x_3 - x_2}{y_3 - y_2}\left(x - \frac{x_2 + x_3}{2}\right) + \frac{y_2 + y_3}{2}$$

Equating these two lines to find the intersection yields:

$$x_c = \frac{m_a m_b(y_1 - y_3) + m_b(x_1 + x_2) - m_a(x_2 + x_3)}{2(m_b - m_a)}$$

$$y_c = y_{a_{perp}}(x_c) = y_{b_{perp}}(x_c)$$

Once these coordinates are known, any of the three known points can be used to find the radius:

$$R = \sqrt{(x_1 - x_c)^2 + (y_1 - y_c)^2} = \sqrt{(x_2 - x_c)^2 + (y_2 - y_c)^2} = \sqrt{(x_3 - x_c)^2 + (y_3 - y_c)^2}$$

If this radius is greater than 500 m, however, LatG is assumed to be 0. This version of the GPS Only Method may use variables LonG and LatGcalculated. LngG is defined as a current longitude G force as calculated ((speed - speedArray[findPreviousIndexOfSpeed()]) / TimeChangeSinceLastGPSEvent) * 1000 / GRAVITY//speed is m/s, TimeChangeSinceLastGPSEvent in milliseconds. LatGcalculated is defined as the velocity squared divided by radius.

$$LonG = \frac{\partial Speed}{\partial t}, \quad LatG = \frac{Speed^2}{R}, \text{ if } R > 500\text{m}, LatG = 0$$

According to an alternative embodiment of the GPS Only Method, the same calculations are performed, except a call is made to the gyroscope to get the angular velocity, $\omega$, of the mobile device. It then squares $\omega$ and multiplies it by the same turning radius from above to find LatG.

$$LatG = \omega^2 R$$

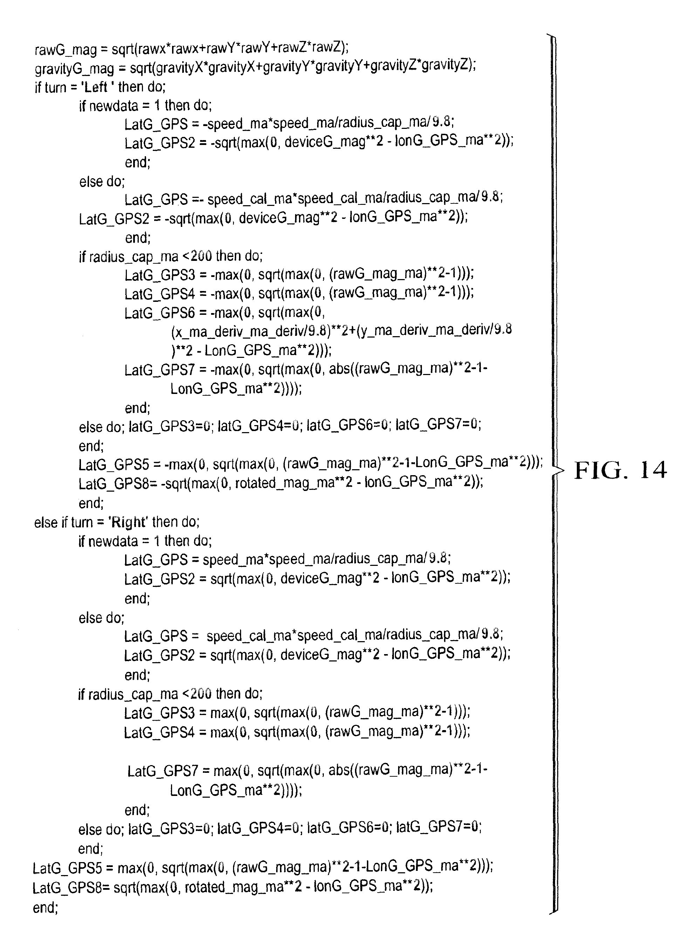

An embodiment of the GPS Only Method is further illustrated by the computer code of FIGURE 14.

**Decomposition Method:**

The decomposition method relies on the fact that the sum of all the accelerations recorded by the accelerometer in the mobile device is the same as the sum of acceleration due to gravity and the lateral and longitudinal accelerations of the car. This equivalence is summarized mathematically.

$$x_{accel}^2 + y_{accel}^2 + z_{accel}^2 = LatG^2 + LonG^2 + G$$

Assuming that this value is 1 G, the equation simplifies to the equation below. In order to avoid negative values, the formula uses a max function to set the minimum returned value as 0. To calculate LonG, the decomposition method makes a GPS call for speed and takes its first derivative to calculate LonG.

$$LatG = \max\left(0, \sqrt{x_{accel}^2 + y_{accel}^2 + z_{accel}^2 - 1 - LonG}\right)$$

$$LonG = \frac{\partial Speed}{\partial t}$$

The variables that this version of the decomposition method uses are LngG and LatG. LngG is defined as a current longitude G force as calculated

$$((\text{speed - speedArray}[\text{findPreviousIndexOfSpeed}()]) / \text{TimeChangeSinceLastGPSEvent}) * 1000 /$$

$$\text{GRAVITY//speed is m/s, TimeChangeSinceLastGPSEvent in milliseconds.}$$

LatG is defined as the current lateral G force as calculated:

turn * Math.sqrt(Math.max(0,

averagedAccelerometerX / GRAVITY * averagedAccelerometerX / GRAVITY +

averageAccelerometerY / GRAVITY * averageAccelerometerY / GRAVITY +

averageAccelerometerZ / GRAVITY * averageAccelerometerZ / GRAVITY - 1 -

averageLongitudeG * averageLongitudeG));

//GRAVITY = 9.8 m/s^2, accelerometer in m/s^2.

According to an alternative embodiment of the decomposition method, the assumption that acceleration due to gravity is 1 G is replaced by making a gravity call to phone.

$$LatG = \max\left(0, \sqrt{x^2_{accel} + y^2_{accel} + z^2_{accel} - G - LonG}\right)$$.

This version of the decomposition method uses LngG and LatGwithLocalGravity. LngG is defined as a current longitude G force as calculated

speedArray[findPreviousIndexOfSpeed()]) / TimeChangeSinceLastGPSEvent) * 1000  / GRAVITY//speed is m/s, TimeChangeSinceLastGPSEvent in milliseconds.

 LatGwithLocalGravity is defined as being calculated with LatG formula as above, but using adjusted gravity registered by phone rather than standard 9.8 m/s^2.

Still another embodiment of the decomposition method uses the first derivative of the GPS coordinates to calculate Speed instead of making the speed call. It then takes the derivative of this Speed variable to calculate LonG.

$$Speed = \frac{\partial}{\partial t}\left(\sqrt{x^2_{pos} + y^2_{pos} + z^2_{pos}}\right), \quad LonG = \frac{\partial Speed}{\partial t}.$$

This version of the decomposition method uses the LatGsecondDerivative variable. LatGsecondDerivative is defined as the second derivative of x squared + second derivative of y squared - derivative of speed as calculated:

int indexBack1Interval = findPreviousIntervalIndex(2);    // Back 1 second

int indexBack2Interval = findPreviousIntervalIndex(3);    // Back 2 seconds

double xDerivative1   = (xNow - previousIntervalX[indexBack1Interval]) / timeChangeSinceLastGPSEvent;

double xDerivative2 = (previousIntervalX[indexBack1Interval] -

previousIntervalX[indexBack2Interval]) /

timeChangeSincePreviousToLastGPSEvent;


doublexSecondDerivative = (xDerivative1 - xDerivative2) /

(timeChangeSinceLastGPSEvent -

timeChangeSincePreviousToLastGPSEvent);


double yDerivative1 = (YNow - previousIntervalY[indexBack1Interval]) /

timeChangeSinceLastGPSEvent;


double yDerivative2 = (previousIntervalY[indexBack1Interval] -

previousIntervalY[indexBack2Interval]) /

timeChangeSincePreviousToLastGPSEvent;


doubleySecondDerivative = (yDerivative1 - yDerivative2) /

(timeChangeSinceLastGPSEvent -

timeChangeSincePreviousToLastGPSEvent);


lateralGSecondDerivative = (xSecondDerivative * xSecondDerivative + ySecondDerivative * ySecondDerivative - longitudeGinMS2) / GRAVITY; //In G force

For the Decomposition & Driver Feedback methods, if latG_ma >0.3 then current_maneuver = 'L'; else if latG_ma < -0.3 then current_maneuver= 'R'; else if lonG_ma >0.3 then current_maneuver= 'D'; else if lonG_ma < -0.3 then current_maneuver= 'A'; else current_maneuver= ''.

**Driver Feedback with GPS:**

The Driver Feedback with GPS method uses the orientation and transformation algorithms to project the acceleration readings onto the x-y plane, $G_{xy}$. Similar to the decomposition method, the Driver Feedback with GPS method uses the fact that $G_{xy}$ is the sum of LatG and LonG to solve for LatG. To calculate LonG, a speed call is made to the GPS and the first derivative of speed is assumed to be LonG.

$$G_{xy}^2 = LatG^2 + LonG^2$$

$$LatG = \max\left(0, \sqrt{G_{xy}^2 - LonG^2}\right), \quad LonG = \frac{\partial Speed}{\partial t}$$

The Driver Feedback with GPS method uses the LngG and V8G variables. LngG is defined as a current longitude G force as calculated

$$((speed - speedArray[findPreviousIndexOfSpeed()]) / timeChangeSinceLastGPSEvent) *$$

$$1000 \ / \ GRAVITY \ //speed \ is \ m/s \ , \ timechangeSinceLastGPSEvent \ in \ milliseconds.$$

V8G is defined as the Lateral G algorithm used in Driver Feedback.

Referring to FIGURE 6, an example of an architectural design for an infrastructure according to embodiments of the invention. An infrastructure 151 according to one embodiment comprises a remote data storage system 152 and a property and casualty system 153. Data may be transmitted via a network 144 from a mobile device 10 in a vehicle 12 to a remote data storage system 152.

The remote data storage system 152 comprises a server 154 and a database 155. The database 155 may store various data and information transmitted to it via the server 154, including: data received from a mobile device 156, data calculated by a mobile device prior to sending 157, and all captured and available data for property and casualty rating 158. Data received from a mobile device 156 may comprise: device identification; Bluetooth MAC address; trip number; location - latitude; location - longitude; location - coarse / fine indicator; speed; acceleration -X; acceleration -Y; acceleration -Z; GPS date and time; turn indicator and/or GPS accuracy.

Prior to sending, the mobile device 10 may also calculate information. Data calculated by a mobile device prior to sending 157 may include: turn indicator; lateral G force; longitudinal G force; turn radius; average lateral G force; average longitudinal G force; average turn radius; X midpoint; X now; X back 1; X back 2; Y midpoint; Y now; Y back 1; Y back 2; tangent calculation for radius 1; tangent calculation for radius 2; time change between locations; longitude G with local gravity; lateral G with local gravity; lateral G calculated; lateral G second derivative; and/or parallel G slope. Examples of captured and available data for property and casualty rating 158 may include: vehicle information (age, manufacturer, model, value), driver information (age, sex, marital status, driving record, accident history, residence), and insurance information (liability, uninsured motorists, comprehensive, collision, liability limits, deductibles, rebates, discounts)

The property and casualty system 153 comprises a server 140, a storage application 141, a staging telematics database 142 and an operational telematics data base 143. The property and casualty system 153 uses the data captured by the remote data storage system 152 to calculate property and casualty premiums for the operators of vehicles. Threshold metrics may be established for driving behaviors so that property and casualty premiums may be identified to correspond to the driving behaviors. This system may be automated so that the property and casualty premiums may be charge to the operators of vehicles in real time depending on their driving behaviors.

The system may also use mobile device sensors to interpret secondary movements of the mobile device to describe and quantify the driver's interaction with the mobile device while the vehicle is being operated. This driver interaction data can be used to calculate a supplementary risk score exclusively based on the secondary movements, driver tasks, cognitive load, and vehicle dynamics. Drivers interacting with mobile devices while driving under high cognitive load driving situations may correlate to a higher crash risk. This feature of the invention allows an insurance provider to charge a higher premium for drivers that pose a higher risk of accident because they text, make phone calls, or otherwise use the mobile device, while operating the vehicle at the same time.

Although the invention has been described with respect to specific embodiments thereof, these embodiments are merely illustrative. The description is intended to describe illustrative embodiments, features and functions in order to provide a person of ordinary skill in the art context to understand the invention. While specific embodiments of, and examples for, the invention are described herein for illustrative purposes only, various equivalent modifications are possible, as those skilled in the relevant art will recognize and appreciate. As indicated, these modifications may be made to the invention in light of the foregoing description of illustrated embodiments of the invention. Thus, while the invention has been described herein with reference to particular embodiments thereof, a latitude of modification, various changes and substitutions are intended in the foregoing disclosures, and it will be appreciated that in some instances some features of embodiments of the invention will be employed without a corresponding use of other features. Therefore, many modifications may be made to adapt a particular situation or material.

Reference throughout this specification to "one embodiment", "an embodiment", or "a specific embodiment" or similar terminology means that a particular feature, structure, or characteristic described in connection with the embodiment is included in at least one embodiment and may not necessarily be present in all embodiments. Thus, respective appearances of the phrases "in one embodiment", "in an embodiment", or "in a specific embodiment" or similar terminology in various places throughout this specification are not necessarily referring to the same embodiment. Furthermore, the particular features, structures, or characteristics of any particular embodiment may be combined in any suitable manner with one or more other embodiments. It is to be understood that other variations and modifications of the embodiments described and illustrated herein are possible in light of the teachings herein.

In the description herein, numerous specific details are provided, such as examples of components and/or methods, to provide a thorough understanding of embodiments of the invention. One skilled in the relevant art will recognize, however, that an embodiment may be able to be practiced without one or more of the specific details, or with other apparatus, systems, assemblies, methods, components, materials, parts, and/or the like. In other instances, well-known structures, components, systems, materials, or operations are not specifically shown or described in detail to avoid obscuring aspects of embodiments of the invention. While the invention may be illustrated by using a particular embodiment, this is not and does not limit the invention to any particular embodiment and a person of ordinary skill in the art will recognize that additional embodiments are readily understandable and are a part of this invention.

Any suitable programming language can be used to implement the routines, methods or programs of embodiments of the invention described herein, including C, C++, Java, assembly language, etc. Different programming techniques can be employed such as procedural or object oriented. Any particular routine can execute on a single computer processing device or multiple computer processing devices, a single computer processor or multiple computer processors. Data may be stored in a single storage medium or distributed through multiple storage mediums, and may reside in a single database or multiple databases (or other data storage techniques). Although the steps, operations, or computations may be presented in a specific order, this order may be changed in different embodiments. In some embodiments, to the extent multiple steps are shown as sequential in this specification, some combination of such steps in alternative embodiments may be performed at the same time. The sequence of operations described herein can be interrupted, suspended, or otherwise controlled by another process, such as an operating system, kernel, etc. The routines can operate in an operating system environment or as stand-alone routines. Functions, routines, methods, steps and operations described herein can be performed in hardware, software, firmware or any combination thereof.

Embodiments described herein can be implemented in the form of control logic in software or hardware or a combination of both. The control logic may be stored in an information storage medium, such as a computer-readable medium, as a plurality of instructions adapted to direct an information processing device to perform a set of steps disclosed in the various embodiments. Based on the disclosure and teachings provided herein, a person of ordinary skill in the art will appreciate other ways and/or methods to implement the invention.

Any of the steps, operations, methods, routines or portions thereof described herein can be implemented in software programming or code, where such software programming or code can be stored in a computer-readable medium and can be operated on by a processor to permit a computer to perform any of the steps, operations, methods, routines or portions thereof described herein. The invention may be implemented by using software programming or code in one or more general purpose digital computers, by using application specific integrated circuits, programmable logic devices, field programmable gate arrays, and so on. Optical, chemical, biological, quantum or nanoengineered systems, components and mechanisms may be used. In general, the functions of the invention can be achieved by any means as is known in the art. For example, distributed, or networked systems, components and circuits can be used. In another example, communication or transfer (or otherwise moving from one place to another) of data may be wired, wireless, or by any other means.

A "computer-readable medium" may be any medium that can contain, store, communicate, propagate, or transport the program for use by or in connection with the instruction execution system, apparatus, system or device. The computer readable medium can be, by way of example only but not by limitation, an electronic, magnetic, optical, electromagnetic, infrared, or semiconductor system, apparatus, system, device, propagation medium, or computer memory. Such computer-readable medium shall generally be machine readable and include software programming or code that can be human readable (e.g., source code) or machine readable (e.g., object code). Examples of non-transitory computer-readable media can include random access memories, read-only memories, hard drives, data cartridges, magnetic tapes, floppy diskettes, flash memory drives, optical data storage devices, compact-disc read-only memories, and other appropriate computer memories and data storage devices. In an illustrative embodiment, some or all of the software components may reside on a single server computer or on any combination of separate server computers. As one skilled in the art can appreciate, a computer program product implementing an embodiment disclosed herein may comprise one or more non-transitory computer readable media storing computer instructions translatable by one or more processors in a computing environment.

A "processor" includes any, hardware system, mechanism or component that processes data, signals or other information. A processor can include a system with a general-purpose central processing unit, multiple processing units, dedicated circuitry for achieving functionality, or other systems. Processing need not be limited to a geographic location, or have temporal limitations. For example, a processor can perform its functions in "real-time," "offline," in a "batch mode," etc. Portions of processing can be performed at different times and at different locations, by different (or the same) processing systems.

It will be appreciated that one or more of the elements depicted in the drawings/figures can also be implemented in a more separated or integrated manner, or even removed or rendered as inoperable in certain cases, as is useful in accordance with a particular application. Additionally, any signal arrows in the drawings/Figures should be considered only as exemplary, and not limiting, unless otherwise specifically noted.

**Claims**

1. A mobile device for capturing motion data of a vehicle (20) when the mobile device (10) is travelling with the vehicle (20), the mobile device (10), in particular a Smartphone, cell phone, mobile telephone, personal digital assistant (PDA), laptop computer, or tablet-style computer, comprising:

   at least one sensor (34), in particular a microphone, accelerometer, GPS, gyroscope, compass, proximity sensors, magnetometer, camera, status of incoming calls, Wi-Fi, NFC, or Bluetooth;
   a processor (32);
   a non-transitory storage medium (30); and
   a first set of computer readable instructions stored in the non-transitory storage medium (30) which when executed by the processor allow the mobile device (10) to determine an orientation of the mobile device (10) relative to an orientation of the vehicle (20); and
   a second set of computer readable instructions stored in the non-transitory storage medium (30) which when executed by the processor (32) allow the mobile device (10) to transform motion sensor data to remove secondary movement of the mobile device (10), which corresponds to the relative movement of the mobile device (10) within the vehicle (20), and retain primary movement of the mobile device (10), which corresponds to the motion of the vehicle (20).

2. The mobile device according to claim 1, wherein when the first set of computer readable instructions is executed by the processor (32) the following steps are performed:

   use two rotation matrices to rotate around an x-axis $R_x(\alpha)$ and an y-axis $R_y(\beta)$, respectively, wherein alpha ($\alpha$) and beta ($\beta$) are Euler angles used to determine the amount of rotation required; and
   multiply these matrices by an original vector to provide an output vector in the desired frame.

3. The mobile device according to one of the preceding claims, wherein when the first set of computer readable instructions is executed by the processor, the following steps are performed:

   use three rotation matrices to rotate around an x-axis $R_x(\alpha)$, an y-axis $R_y(\beta)$, and a z-axis $R_z(\gamma)$ respectively, wherein alpha ($\alpha$), beta ($\beta$) and gamma ($\gamma$) are Euler angles used to determine the amount of rotation required; and
   multiply all three of these matrices X-Y-Z rotation matrices together to create a total rotation matrix.

4. The mobile device according to one of the preceding claims, wherein when the second set of computer readable instructions is executed by the processor (32), the following steps are performed:

   use two rotation matrices to rotate around an x-axis ($R_x(\alpha)$ and an y-axis ($R_y(\beta)$, respectively, wherein alpha ($\alpha$) and beta ($\beta$) are Euler angles used to determine the amount of rotation required; and
   multiply these matrices by an original vector to provide an output vector in the desired frame.

5. The mobile device according to one of the preceding claims, wherein when the second set of computer readable instructions is executed by the processor (32), the following steps are performed:

   use three rotation matrices to rotate around an x-axis $R_x(\alpha)$, an y-axis $R_y(\beta)$, and a z-axis $R_z(\gamma)$ respectively, wherein alpha ($\alpha$), beta ($\beta$) and gamma ($\gamma$) are Euler angles used to determine the amount of rotation required; and
   multiply all three of these matrices X-Y-Z rotation matrices together to create a total rotation matrix.

6. The mobile device according to one of the preceding claims, further comprising a third set of computer readable instructions stored in the non-transitory storage medium (30) which when executed by the processor allow the mobile device (10) to determine a vehicle telematic, selected from a lateral acceleration, longitudinal acceleration, and speed of the vehicle, at a specific point in time.

7. The mobile device according to claim 6, wherein the third set of computer readable instructions, when executed applies GPS sensor data representing the location of the mobile device (10) to calculate LonG and LatG, wherein LonG is the derivative of speed, and wherein LatG is obtained where speed is squared and divided by a turn radius of the vehicle (20).

8. The mobile device according to claim 6, wherein third set of computer readable instructions when executed applies accelerometer data to determine the lateral and longitudinal accelerations of the vehicle (20).

9. The mobile device according to one of the preceding claims, further comprising loading a set of instructions that comprise the first set of instructions onto a tangible readable storage medium of the mobile device (10), wherein the instructions, when executed by a processor (32) of the mobile device (10), perform the following steps:

collecting mobile device orientation data at a point in time;
collecting vehicle orientation data at about the same point in time; and
determining the orientation of the mobile device relative to the orientation of the vehicle (20) via the collected mobile device orientation data and the collected vehicle orientation data.

10. The mobile device according to one of the preceding claims, further comprising loading a set of instructions that comprise the second set of instructions onto a tangible readable storage medium of the mobile device (10), wherein the instructions, when executed by a processor (32) of the mobile device (10), perform the following steps:

collecting mobile device motion data during a period of time; and
transforming the collected mobile device motion data in view of the determined orientation of the mobile device relative to the orientation of the vehicle so that the collected mobile device motion data corresponds to the motion of the vehicle.

11. The mobile device according to one of the preceding claims, further comprising:

transmitting the transformed motion sensor data to a remote processing computer (152); and
calculating an insurance premium based at least in part on the transformed motion sensor data.

12. A tangible, non-transitory computer readable storage medium, preferably residing on a smartphone, cell phone, mobile telephone, personal digital assistant (PDA), laptop computer, or tablet-style computer, containing instructions that, when executed on by a processor (32), perform the following steps:

determining the orientation of a mobile device (10) relative to the orientation of a vehicle (20) via collected mobile device orientation data and collected vehicle orientation data; and
transforming collected mobile device motion data in view of the determined orientation of the mobile device relative to the orientation of the vehicle (20) so that the collected mobile device motion data corresponds to the motion of the vehicle (20).

13. The tangible, non-transitory computer readable storage medium as claimed in claim 12, further comprising instructions for transmitting the transformed mobile device motion data to a remote processing computer (152) and optionally calculating an insurance premium based at least in part on the transformed motion data.

14. A method for capturing telematics motion data of a vehicle (20) via a mobile device (10) located within the vehicle (20), the method comprising:

collecting mobile device orientation data at a point in time, preferably from at least one mobile device sensor selected from: microphone; accelerometer; GPS; gyroscope; compass; proximity sensors; magnetometer; camera; status of incoming calls; Wi-Fi; NFC; and Bluetooth;
collecting vehicle orientation data at about the same point in time, preferably from at least one mobile device sensor selected from: microphone; accelerometer; GPS; gyroscope; compass; proximity sensors; magnetometer; camera; status of incoming calls; Wi-Fi; NFC; and Bluetooth;
determining the orientation of the mobile device (10) relative to the orientation of the vehicle (10) via the collected mobile device orientation data and the collected vehicle orientation data;
collecting mobile device motion data during a period of time after the point in time of the collecting mobile device orientation data, preferably from at least one mobile device sensor selected from: microphone; accelerometer; GPS; gyroscope; compass; proximity sensors; magnetometer; camera; status of incoming calls; Wi-Fi; NFC; and Bluetooth; and
transforming the collected mobile device motion data in view of the determined orientation of the mobile device (10) relative to the orientation of the vehicle (20) so that the collected mobile device motion data corresponds to the motion of the vehicle (20).

**15.** The method according to one of the preceding claims 12-14, wherein the determining the orientation of the mobile device relative to the orientation of the vehicle comprises:

using two rotation matrices to rotate around an x-axis ($R_x(\alpha)$) and an y-axis ($R_y(\beta)$), respectively, wherein alpha ($\alpha$) and beta ($\beta$) are Euler angles used to determine the amount of rotation required; and
multiplying these matrices by an original vector to provide an output vector in the desired frame.

**16.** The method according to one of the preceding claims 12-15, wherein the transforming the collected mobile device motion data comprises:

using two rotation matrices to rotate around an x-axis ($R_x(\alpha)$) and an y-axis ($R_y(\beta)$), respectively, wherein alpha ($\alpha$) and beta ($\beta$) are Euler angles used to determine the amount of rotation required; and
multiplying these matrices by an original vector to provide an output vector in the desired frame.

**17.** The method according to one of the preceding claims 12-16, further comprising:

determining a vehicle telematic, selected from the lateral acceleration, longitudinal acceleration, and speed of the vehicle (20), at a specific point in time
and/or
outputting the vehicle telematic.

FIG. 1A

FIG. 1B

## FIG. 1C

MOBILE DEVICE  10

MEMORY  30

DRIVING ANALYSIS APPLICATION  50

DATA COLLECTION MODULE  40

| ORIENTATION ALGORITHM | TRANSFORMATION ALGORITHM |
|---|---|
| 60 | 62 |

| DATA PROCESSING MODULE | FEEDBACK MODULE |
|---|---|
| 42 | 44 |

| HISTORICAL DRIVING DATA | DRIVING ENVIRONMENT APPLICATION(S) |
|---|---|
| 46 | 58 |

| PROCESSOR | DISPLAY | I/O DEVICES |
|---|---|---|
| 32 | 36 | 38 |

SENSORS  34

| ACCELEROMETER | TRACKING SYSTEM |
|---|---|
| 54 | 56 |

FIG. 2

## FIG. 3

**SENSORS**

34

MOBILE DEVICE
ORIENTATION
SENSOR DATA

MOBILE DEVICE
MOTION
SENSOR DATA

MOBILE DEVICE
ORIENTATION
ALGORITHM 60

62

40

MOBILE DEVICE
ORIENTATION

MOBILE DEVICE
TRANSFORMATION
ALGORITHM

**DATA COLLECTION MODULE**

VEHICLE
TELEMATICS

P2

P1

P3

ccntrc

a

b

## FIG. 5

START

68 — INITIATE CLOCK T=0

70 — COLLECT ORIENTATION DATA FOR MOBILE DEVICE AT T

72 — COLLECT ORIENTATION DATA FOR VEHICLE AT T

74 — RECONCILE ORIENTATION OF MOBILE DEVICE WITH ORIENTATION OF VEHICLE

76 — COLLECT MOTION DATA FOR PERIOD OF TIME, P

78 — TRANSFORM THE MOTION DATA IN VIEW OF RECONCILED ORIENTATION

80 — OUTPUT TRANSFORMED MOTION DATA

82 — IS VEHICLE STILL OPERATING ? — YES → T=T+P — 84

NO

END

FIG. 4

## FIG. 6

- 152
- 155
- 154 SERVER
- DATA SENT FROM MOBILE DEVICE — 156
- DATA CALCULATED BY MOBILE DEVICE PRIOR TO SENDING — 157
- ALL CAPTURED AND AVAILABLE DATA FOR P AND C RATING — 158
- 151
- 144
- 12
- 140 SERVER
- 141 STORAGE APP
- 142 STAGING TELEMATICS DATABASE
- 143 OPERATIONAL TELEMATICS DATABASE
- 153

## FIG. 7

$$R\chi(\alpha)=\begin{bmatrix}1 & 0 & 0\\ 0 & \cos\alpha & -\sin\alpha\\ 0 & \sin\alpha & \cos\alpha\end{bmatrix} \quad R\gamma(\beta)=\begin{bmatrix}\cos\beta & 0 & \sin\beta\\ 0 & 1 & 0\\ -\sin\beta & 0 & \cos\beta\end{bmatrix}$$

FIG. 8

FIG. 9

FIG. 10

FIG. 11

FIG. 12

FIG. 13

```
rawG_mag = sqrt(rawx*rawx+rawY*rawY+rawZ*rawZ);
gravityG_mag = sqrt(gravityX*gravityX+gravityY*gravityY+gravityZ*gravityZ);
if turn = 'Left ' then do;
        if newdata = 1 then do;
                LatG_GPS = -speed_ma*speed_ma/radius_cap_ma/9.8;
                LatG_GPS2 = -sqrt(max(0, deviceG_mag**2 - lonG_GPS_ma**2));
                end;
        else do;
                LatG_GPS =- speed_cal_ma*speed_cal_ma/radius_cap_ma/9.8;
        LatG_GPS2 = -sqrt(max(0, deviceG_mag**2 - lonG_GPS_ma**2));
                end;
        if radius_cap_ma <200 then do;
                LatG_GPS3 = -max(0, sqrt(max(0, (rawG_mag_ma)**2-1)));
                LatG_GPS4 = -max(0, sqrt(max(0, (rawG_mag_ma)**2-1)));
                LatG_GPS6 = -max(0, sqrt(max(0,
                        (x_ma_deriv_ma_deriv/9.8)**2+(y_ma_deriv_ma_deriv/9.8
                        )**2 - LonG_GPS_ma**2)));
                LatG_GPS7 = -max(0, sqrt(max(0, abs((rawG_mag_ma)**2-1-
                        LonG_GPS_ma**2))));
                end;
        else do; latG_GPS3=0; latG_GPS4=0; latG_GPS6=0; latG_GPS7=0;
        end;
        LatG_GPS5 = -max(0, sqrt(max(0, (rawG_mag_ma)**2-1-LonG_GPS_ma**2)));
        LatG_GPS8= -sqrt(max(0, rotated_mag_ma**2 - lonG_GPS_ma**2));
        end;
else if turn = 'Right' then do;
        if newdata = 1 then do;
                LatG_GPS = speed_ma*speed_ma/radius_cap_ma/9.8;
                LatG_GPS2 = sqrt(max(0, deviceG_mag**2 - lonG_GPS_ma**2));
                end;
        else do;
                LatG_GPS =  speed_cal_ma*speed_cal_ma/radius_cap_ma/9.8;
                LatG_GPS2 = sqrt(max(0, deviceG_mag**2 - lonG_GPS_ma**2));
                end;
        if radius_cap_ma <200 then do;
                LatG_GPS3 = max(0, sqrt(max(0, (rawG_mag_ma)**2-1)));
                LatG_GPS4 = max(0, sqrt(max(0, (rawG_mag_ma)**2-1)));

                LatG_GPS7 = max(0, sqrt(max(0, abs((rawG_mag_ma)**2-1-
                        LonG_GPS_ma**2))));
                end;
        else do; latG_GPS3=0; latG_GPS4=0; latG_GPS6=0; latG_GPS7=0;
        end;
LatG_GPS5 = max(0, sqrt(max(0, (rawG_mag_ma)**2-1-LonG_GPS_ma**2)));
LatG_GPS8= sqrt(max(0, rotated_mag_ma**2 - lonG_GPS_ma**2));
end;
```

FIG. 14

Europäisches
Patentamt

European
Patent Office

Office européen
des brevets

# EUROPEAN SEARCH REPORT

Application Number

EP 13 19 4537

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/132714 A1 (NILSSON JAN [SE]) 14 June 2007 (2007-06-14) * abstract; figures 1-5 * * paragraphs [0005] - [0014], [0086], [0087] * * claims 1-5 * ----- | 1-17 | INV. G06F3/0346 |
| X | US 2008/225000 A1 (BELLWOOD THOMAS ALEXANDER [US] ET AL) 18 September 2008 (2008-09-18) * abstract; figures 2-5 * * paragraphs [0005] - [0009], [0029] - [0031], [0035] - [0040] * ----- | 1-17 | |

TECHNICAL FIELDS
SEARCHED      (IPC)

G06F

The present search report has been drawn up for all claims

| Place of search | Date of completion of the search | Examiner |
|---|---|---|
| Munich | 8 April 2014 | Pfaffelhuber, Thomas |

EPO FORM 1503 03.82 (P04C01)

## ANNEX TO THE EUROPEAN SEARCH REPORT
## ON EUROPEAN PATENT APPLICATION NO.

EP 13 19 4537

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2014

| Patent document cited in search report | Publication date | Patent family member(s) | | Publication date |
|---|---|---|---|---|
| US 2007132714 A1 | 14-06-2007 | US 2007132714 A1<br>WO 2007065734 A2 | | 14-06-2007<br>14-06-2007 |
| US 2008225000 A1 | 18-09-2008 | NONE | | |

For more details about this annex : see Official Journal of the European Patent Office, No. 12/82

**EP 2 738 650 A1**

**Patent documents cited in the description**

- US 6832141 B
- US 5499182 A